# EUROPEAN PATENT SPECIFICATION

(11) **EP 0 424 365 B1**
(45) Date of publication and mention of the grant of the patent: **15.01.1997**
(21) Application number: 91101042.9
(22) Date of filing: 05.07.1988
(51) Int. Cl.: H05B 6/68, H02H 3/00, G05D 23/19

(54) **Controlling device for electric apparatus**
Steuervorrichtung für elektrisches Gerät
Dispositif de commande pour appareil électrique

(30) Priority: 06.07.1987 JP 168058/87; 28.04.1988 JP 106438/88
(43) Date of publication of application: 24.04.1991
(62) Divisional of application: 88110684.3
(73) Proprietor: MATSUSHITA ELECTRIC INDUSTRIAL CO., LTD., Kadoma-shi, Osaka-fu, 571 (JP)
(72) Inventor: Kurita, Hitoshi, Yamatokoriyama-shi, Nara-ken (JP); Senda, Hiroyuki, Nara-shi, Nara-ken (JP); Terasaki, Hiroshi, Ikoma-shi, Nara-ken (JP)
(74) Representative: Eisenführ, Speiser & Partner

(56) References cited:
- EP-A- 0 199 264
- WO-A-85/03995
- DE-A- 3 115 517
- JP-A-60 181 517
- SE-B- 449 931
- US-A- 4 561 741
- US-A- 4 600 962
- US-A- 4 618 779
- PATENT ABSTRACTS OF JAPAN vol. 10, no. 25 (M-450)(2082) 31 January 1986 & JP-A-60 181 517 ( MATSUSHITA DENKI SANGYO K.K. ) 17 September 1985

## Description

The invention relates to a control apparatus of a high-frequency electric heating appliance comprising a plurality of high-frequency generating means connected to a plurality of high-voltage power supplies, switching means to switch electric power to the power supplies, input means to select desired functions, and a control unit to effect the operation of the switching means in accordance with the functions selected by the input means and to control display means. Such a control apparatus of a high-frequency electric heating appliance comprising a plurality of high-frequency generating means connected to a plurality of high-voltage power supplies is known from DE-A-31 15 517.

Generally, recent commodities are considerable in diversity. In terms of heating apparatuses, single function electronic ranges, single function electric ovens, commodities intended for higher outputs by two high-frequency generating apparatuses mounted therein, compound commodities having both conventional and high-frequency heating in the form of alternate or simultaneous heating are known. Accordingly, heater, high-frequency heating apparatus which are function components of the commodities, relay components for connecting them are extremely increased in number. For example, a high-frequency heating apparatus with two high-frequency heating apparatuses requires two high-voltage transformers, two high-voltage capacitors, two magnetrons and two high-voltage diodes, which are the function components, two relay apparatuses and so on for controlling them. The frequency of failures with the functional components increases with larges numbers of the components. The failures of the functional components cause dangerous conditions like abnormal current flow, fuming, ignition, insulation deterioration and so on.

Also, more time is taken to locate which component is out of order so as to repair it, because of the large number of components.

From EP-A-199 264 an electric appliance in the form of a combined microwave oven is known having a plurality of different heating means, i.e. resistance heaters and a microwave heater. The functions of these heaters are controlled by a control unit which are operated in accordance with input means for selecting desired functions. If one part in such an electric appliance is defective, for instance the resistance heater or the microwave heater, or any other part controlling these heaters, the whole appliance would not be usable, particularly if further operation of the defective parts could lead to abnormal high currents or the like.

From US-A-4,618,779 a system for parallel power supplies is known using a microprocessor as a controller to balance the output currents of the two power supplies connected in parallel. From DE-A-31 15 517 a microwave oven having two magnetron units is known. An alarm indication lamp would be lit if at least one of the two magnetron units showed an abnormal condition. If both magnetron units are indicated as being defective, it is checked as to whether the door of the microwave oven is open, which would be the reason that both magnetron units show an abnormal condition.

It is an object of the present invention to provide a control apparatus of a high-frequency electric heating appliance having a plurality of frequency generating means, which provides an abnormality output signal if one of the generating means shows an abnormal condition in comparison with the other.

For solving this object, a control apparatus as defined above is characterized by current detecting means to monitor electric current values of the power supplies, and comparing means to compare corresponding electric current values of the power supplies with each other and providing an abnormality output signal if corresponding electric values representing said electric current values deviate from each other by more than a predetermined amount.

Preferable embodiments are defined in the dependent claims.

These and other features of the present invention will become apparent from the following description taken in conjunction with preferred embodiments thereof with reference to the accompanying drawings, throughout which like parts are designated by like reference numerals, and in which:
Fig. 1 is a sectional view of the major body of a heating apparatus having a plurality of heating means;
Fig. 2 is a circuit diagram thereof; and
Fig. 3 is a flow chart on the failure examination of the major control portion thereof.

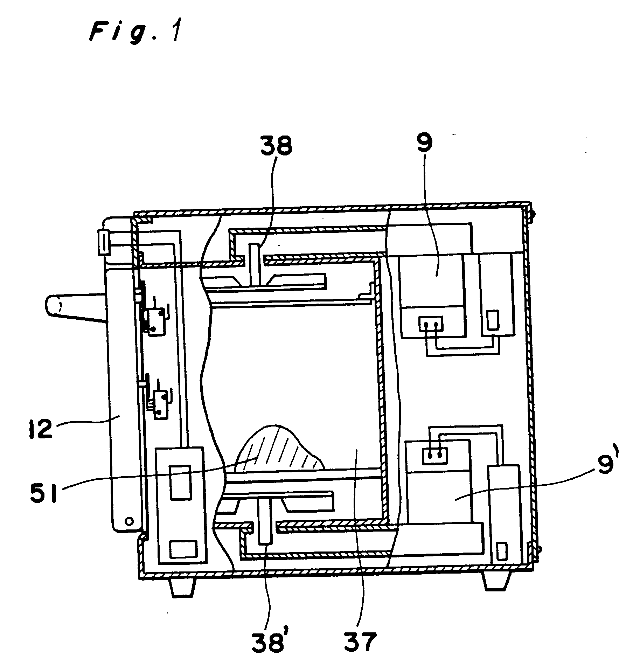

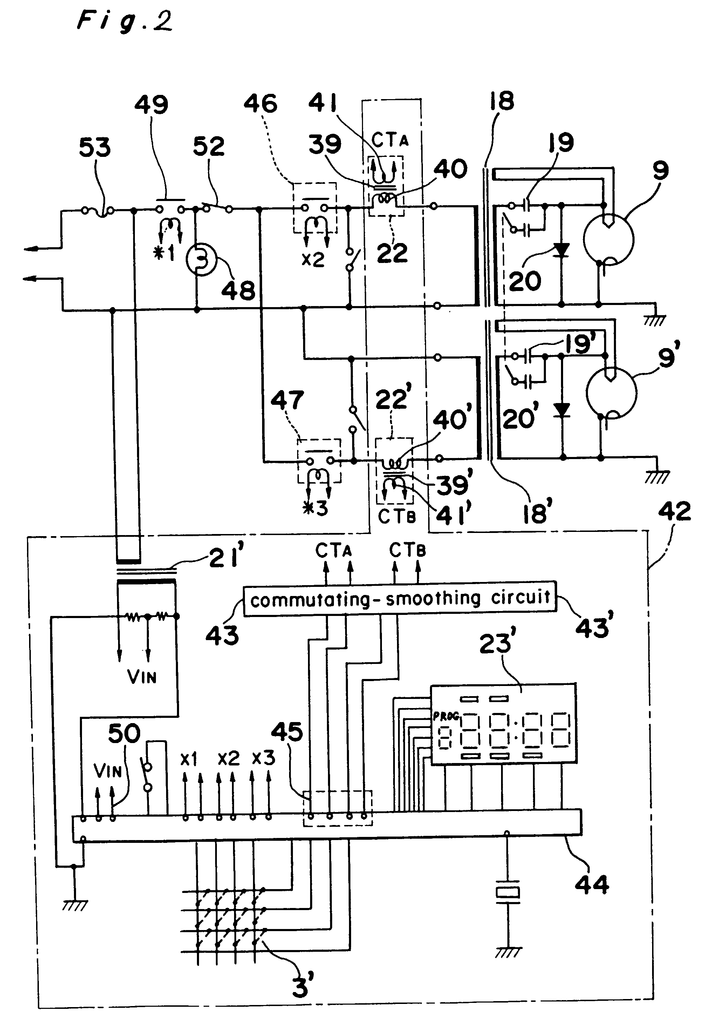

A high-frequency heating apparatus having a plurality of magnetrons will be described hereinafter as an embodiment. In order to increase the high-frequency output, in Fig. 1, Fig. 2, two magnetrons 9,9' are provided on two waveguides 38, 38' with the same specification being disposed in the upper portion and the lower portion of a heating chamber 37.

The power converted into necessary operation voltages is fed to the magnetrons 9 and 9' by a high-voltage circuit composed of two high-voltage transformers 18, 18' of the same specification, high-voltage capacitors 19, 19', and high-voltage diodes 20, 20'.

Current transformers 22, 22' are provided as current detection means at the AC primary side.

The current transformers 22, 22' are provided with coils 40, 40' being wound on iron cores 39, 39', and coils 41, 41' insulated therefrom and wound likewise on the iron cores 39, 39'.

The current transformers 22, 22', together with other electronic components on a print base plate 42 constitute a control portion for controlling the main body. When the high-frequency heating apparatus is operating, current flows through the coils 40, 40', and likewise through the coils 41, 41' to excite the respective iron cores 39, 39'. The magnetic flux causes a voltage, in the coils 41, 41', corresponding to the current on the primary side. The voltages caused in coils 41, 41' are fed through rectification smoothing circuits 43, 43' to convert them into DC. The number of the respective coils, the size of the iron cores, the capacitor of the rectification circuit, and the values of the resistors are set so that the output voltage converted into this direct current may be proportional to the currents flowing through the coils 40, 41' at the AC primary side. In the embodiment (concretely), the output voltage is adapted to become 4V when the current flowing through coils 40, 40' is 10A, and becomes 0.4V when the current is 1A. The outputs of the rectification smoothing circuits 43, 43' are connected with inputs 45 of a microcomputer circuit 44 which is a main control unit.

The microcomputer circuit 44 is connected with a key-board 3' for controlling the high-frequency heating apparatus main body, a fluorescent display tube 23' as display means showing the operating condition, and intermittent relays 46 and 47 for interrupting the high-frequency heating operation of each unit, and a lamp relay 49 to be used for interruption of an illumination lamp 48 within the heating chamber to control the operation of the main body in accordance with a procedure programmed in advance. The microcomputer circuit 44 is operated by power provided by a low-voltage transformer 21', and through the conversion thereof into the direct current.

Also, a voltage input end 50 for taking in one portion of the output voltage on the secondary side of the low-voltage transformer 21' is provided on the microcomputer circuit 44 so as to monitor the voltage of the AC primary side. The main body has a door 12 provided on the front face of the heating chamber 37 of the outlet place for food 51, a door switch 52 having a contact for opening, closing operations in accordance with opening, closing of the door 12 to interrupt the input to the high-voltage transformers 18, 18', a fuse 53 to be fused when excessive current flows into the AC primary side.

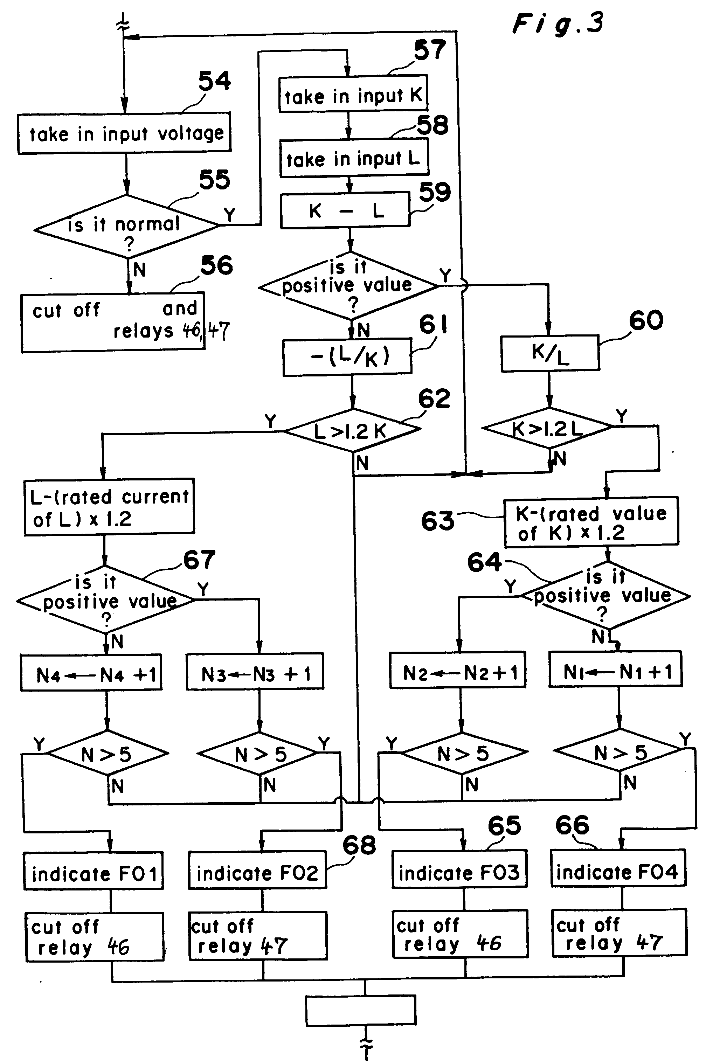

The control contents of the microcomputer circuit will be described with the use of the flow chart of Fig. 3.

Namely, the main body handles the input voltage from the input end 45 at a given period during the operation (step 54). It is judged whether or not the voltage value is within the range of a predetermined voltage (step 55). When the voltage deviates by 15% or more with respect to the rated voltage of the appliance, both the intermittent relays 46 and 47 are turned off to prevent generation of high frequency (step 56). It is possible that the operation is adapted not to be effected from the beginning if the voltage is abnormal with the voltage detection being provided even at the inoperative condition of the main body. The operation is continued when the voltage is within the normal range to temporarily store the voltage, caused in the coil 41 of the current transformer 22, in a memory (RAM) for taking in the DC voltage rectified and smoothed. This is assumed to be K (step 57). Similarly the DC output which has been detected by the coil 41' of the current transformer 22' is taken in. This is assumed to be L (step 58). Of the difference between the values is positive, i.e., K is larger than L (step 59), the K operation of the K/L is effected (step 60). when it is negative, i.e., L is larger than K, the operation of - (L/K) is effected (step 61). In the embodiment, it is judged whether or not the result is larger than 1.2. Namely, judgment is caused to be made as to whether (step 62) the difference between K and L is 20% or more. If the value is smaller than 1.2 (namely, it is judged that nothing is wrong with two magnetrons, the value is within the range to be caused through normal tolerances of the parts, being the normal function), the routine returns to the initial one so as to handle the input voltage again. When K is larger than L with the difference between K and L being abnormal and higher than 20%, the value higher by 20% is felt (step 63) with respect to a value shown at the normal time of K predetermined from K to judge whether or not the value is positive or negative (step 64). When the value is positive, the current of K is abnormally large, i.e., is 1.2 times as much as the value of L and furthermore is larger than the rated current of the K. In the secondary current of the high-voltage transformer 18, a number N₂ for judging that the high-voltage capacitor 19 has been short-circuited is measured. When this condition has continued five times or more, the output to the intermittent relay 46 is cut, the contact of the intermittent relay 46 is opened to cut only the abnormal current flowing into the high-voltage transformer 18. F03 showing the abnormality in coded form is displayed on the fluorescent display tube 23 (step 65).

When the value is negative, the value of L is abnormally lower as compared with the normal condition. In the secondary circuit of the high-voltage transformer 18', it is judged that the short-circuit of the high-voltage diode 20', magnetron 9' and so on, or the portion of the secondary circuit has become opened. When the number N₁ has continued five times or more, the intermittent relay 47 is cut to turn off the current flowing to the high-voltage transformer 18'. The fluorescent display tube 23' displays F04 (step 66). Once the third intermittent relay 46 or the fourth intermittent relay 47 has been cut in any case, the retaining program is kept in the relay till the power supply is cut off.

When the L is larger than the K, and the difference is 20% or more, the value high by 20% is reduced from the L with respect to a value shown at the normal time of the predetermined L so as to judge whether the value is positive or negative (step 67). If the value is positive, the current of the L is assumed to be abnormal. In the secondary circuit of the high-voltage transformer 18', it is judged to be the short-circuit condition of the high-voltage capacitor 19 and so on to measure the number N₃. When this condition has been continued five times or more, the intermittent relay 47 is cut to turn off only the input to the high-voltage transformer 18'. The fluorescent display tube 23 displays F02 to notify the user of the abnormality (step 68). When the value has become negative, the K value is abnormally lower than the normal condition. It is judged that the high-voltage diode 20 and the magnetron 9 in the secondary circuit of the high-voltage transformer 18 have been short-circuited, or one portion of the secondary circuit has been opened. The number N₄ is counted. When this condition has continued five times or more, the third intermittent relay 46 is cut to turn off only the input to the high-voltage transformer 18. The fluorescent display tube 23 is adapted to display the F01. The measurement is effected every 0.1 second.

The above-description is given in connection with two magnetrons. When more magnetrons are provided, an appropriate number of current detecting means is provided. The differences between two are used in the calculation of A-B, B-C, C ... ... X-A from the detected signals A, B, C ... ... X. It is judged whether or not the differences are higher than the difference established through the consideration of tolerances. When there is difference therebetween, the circuit where the failure occurred is determined by the judgment of the size with respect to the value at the rated current predetermined as in the above-described embodiment so as to open the relay contact of only the circuit with the failure being caused therein.

As is clear from the foregoing description, according to the arrangement of the present invention, information obtained from the voltage detecting means, the current detecting means and the temperature detecting means is compared with the information predetermined by the major control portion in a heating apparatus having a digital control portion , the abnormality may be detected immediately and the abnormal content may be confirmed at a glance by the display means. Also, even if the abnormality is caused during the heating operation, the heating operation may be automatically stopped so that extreme safety is ensured. As the abnormal place is definite, much time is not required to repair the abnormal location.

The other heating means may continuously operate even if one of the others fails in the heating apparatus having a plurality of heating means. But if two high-frequency generating apparatuses (magnetrons) are provided for normal operation, the cooking time becomes larger when only a single magnetron is used. It may be used, thus resulting in considerable improvements.

The measured power-voltage is stored in the memory portion with the constant conditions by the use of the predetermined voltage detecting means to compare the content with the subsequent power voltage value, so that the error of the power voltage measuring circuit may be set off to ensure extremely high-precise measurement, detection, with the result that the considerable cost reduction may be provided as compared with the high-priced circuit component of extremely small dispersion.

## Claims

1. Control apparatus of a high-frequency electric heating appliance comprising
a plurality of high-frequency generating means (9, 9') connected to a plurality of high-voltage power supplies (18-20; 18'-20');
switching means (46, 47) to switch electric power to the power supplies (18-20; 18'-20');
input means (3') to select desired functions; and
a control unit to effect the operation of the switching means (46, 47) in accordance with the functions selected by the input means (3') and to control display means (23');
characterized by
current detecting means (22, 43; 22', 43') to monitor electric current values of the power supplies (18-20; 18'-20'); and
comparing means (44) to compare corresponding electric current values of the power supplies (18-20; 18'-20') with each other and providing an abnormality output signal if corresponding electric values representing said electric current values deviate from each other by more than a predetermined amount.

2. Control apparatus according to claim 1,
characterized in that the comparing means (44) provide an abnormality output signal if corresponding input currents of the power supplies (18-20; 18'-20') deviate from each other by more than the predetermined amount.

3. Control apparatus according to claim 2,
characterized by the comparing means (44) being constituted by a microcomputer in which representative values (K, L) of the input currents of the power supplies (18-20; 18'-20') are subtracted (step 59) from each other, and divided by each other (steps 60 or 61), in order to provide an indication of which of the power supplies (18-20; 18'-20') or high-frequency generating means (9, 9') failed.

## Patentansprüche

1. Steuereinrichtung eines elektrischen Hochfrequenz-Heizgerätes mit einer Mehrzahl von Hochfrequenz erzeugenden Mitteln (9, 9'), die mit einer Mehrzahl von Hochspannungsversorgungen (18-20; 18'-20') verbunden sind;
Schaltmitteln (46, 47), die elektrische Leistung an die Stromversorgungen (18-20; 18'-20') schalten;
Eingabemitteln (3'), mit denen gewünschte Funktionen ausgewählt werden, und mit einer Steuereinheit, die die Betätigung der Schaltmittel (46, 47) entsprechend der über die Eingabemittel (3') gewählten Funktionen bewirkt und die Anzeigemittel (23') steuert;
gekennzeichnet durch
Stromdetektormittel (22,43; 22', 43'), die Werte des elektrischen Stroms der Stromversorgungen (18-20; 18'-20') überwachen und
Vergleichsmittel (44), die einander entsprechende Werte des elektrischen Stroms der Stromversorgungen (18-20; 18'-20') miteinander vergleichen und ein Fehlersignal ausgeben, wenn einander entsprechende elektrische Werte, die die genannten Werte des elektrischen Stroms darstellen, um mehr als einen vorbestimmten Betrag voneinander abweichen.

2. Steuereinrichtung nach Anspruch 1,
dadurch gekennzeichnet, daß die Vergleichsmittel (44) ein Fehlersignal ausgeben, wenn einander entsprechende Eingangsströme der Stromversorgungen (18-20; 18'-20') um mehr als den vorbestimmten Betrag voneinander abweichen.

3. Steuereinrichtung nach Anspruch 2,
dadurch gekennzeichnet, daß die Vergleichsmittel (44) aus einem Mikrocomputer bestehen, der repräsentative Werte (K, L) der Eingangsströme der Stromversorgungen (18-20; 18'-20') voneinander subtrahiert (Schritt 59) und durch einander dividiert (Schritt 60 oder 61), um anzuzeigen, welche der Stromversorgungen (18-20; 18'-20') oder Hochfrequenz erzeugenden Mittel (9, 9') fehlerhaft funktionieren.

## Revendications

1. Dispositif de commande d'appareil de chauffage électrique à haute fréquence comportant une pluralité de moyens de génération de hautes fréquences (9,9') connectés à une pluralité d'alimentations de puissance à haute tension (18-20;18'-20');
un moyen de commutation (46,47) pour commuter la puissance électrique des alimentations de puissance (18-20;18'-20');
un moyen d'entrée (3') pour sélectionner des fonctions désirées; et
une unité de commande pour commander les moyens de commutations (46,47) selon les fonctions sélectionnées par le moyen d'entrée (3') et pour commander un moyen d'affichage (23');
caractérisé par
un moyen de détection de courant (22,43;22',43') pour contrôler les valeurs des courants électriques des alimentations de puissance (18-20;18'-20'); et
un moyen de comparaison (44) pour comparer les valeurs des courants électriques correspondantes des alimentations de puissance (18-20;18'-20') les unes avec les autres et prévoir un signal de sortie d'aberration si les valeurs électriques correspondantes représentant lesdites valeurs de courant électriques s'écartent les unes des autres d'une quantité supérieure à une valeur prédéterminée.

2. Dispositif de commande selon la revendication 1,
caractérisé en ce que le moyen de comparaison (44) prévoit un signal de sortie d'aberration si des courants d'entrée correspondants des alimentations de puissance (18-20;18'-20') s'écartent les uns des autres d'une quantité supérieure à la valeur prédéterminée.

3. Dispositif de commande selon la revendication 2,
caractérisé par le moyen de comparaison (44) qui est constitué par un microprocesseur dans lequel des valeurs représentatives (K,L) des courants d'entrée des alimentations de puissance (18-20;18'-20') sont soustraites les unes aux autres (étape 59), et divisées par les autres (étapes 60 ou 61), de manière à indiquer laquelle des alimentations de puissance (18-20;18'-20') ou lequel des moyens de génération de hautes fréquences (9,9') a failli.
